# DEMANDE DE BREVET EUROPEEN

(11) **EP 1 258 932 A1**
(43) Date de publication de la demande: **20.11.2002**
(21) Numéro de dépôt: 02291103.6
(22) Date de dépôt: 02.05.2002
(51) Int. Cl.: H01M 2/26

(54) **Connection interne pour générateur électrochimique de forte puissance**

(30) Priorité: 14.05.2001 FR 0106305
(71) Demandeur: ALCATEL, 75008 Paris (FR)
(72) Inventeur: Lebouchard, Gilles, 16120 Mosnac (FR); Payen, Stéphane, 16290 Hersac (FR)
(74) Mandataire: Sciaux, Edmond

(57) **Abrégé**

L'invention concerne un générateur électrochimique (1) comprenant des bornes positive (5) et négatives (4), des électrodes positive (8) et négative (9), reliées électriquement respectivement à la borne positive et à la borne négative, un collecteur d'une première polarité (20) présentant une partie plane (21) reliée électriquement à l'électrode de la première polarité, des moyens de liaison électrique pliés (26), reliant la partie plane du collecteur à la borne de la première polarité, présentant un rayon de courbure de pliage inférieur à celui d'une pièce présentant la même épaisseur que la partie plane.

Le générateur de l'invention présente un assemblage facilité, une résistance électrique interne réduite, des dimensions réduites et une durée de vie accrue.

L'invention concerne également un procédé d'assemblage d'un tel générateur électrochimique.

## Description

L'invention porte sur des générateurs électrochimiques de puissance, et plus particulièrement sur des générateurs électrochimiques cylindriques de forte puissance, par exemple susceptibles de fournir un courant de décharge représentant 20 fois le courant nécessaire à la décharge du générateur en une heure. Il s'agit généralement de générateurs dont le diamètre est au moins égal à 20mm, notamment de formats couramment appelés "KR14" ("R14" ou "C") et "KR20 ("R20" ou "D"). De tels formats sont détaillés dans la norme CRI/IRC 285§3.1. L'invention concerne plus précisément la liaison électrique entre les électrodes et les bornes de tels générateurs.

Les générateurs cylindriques classiques présentent généralement un spiralage de faisceau électrochimique formant un bobineau. Le spiralage comprend alors deux électrodes respectivement de polarité positive et négative encadrant un séparateur. Les générateurs présentent des connexions réalisées sous forme de languettes rectangulaires qui émergent du bobineau. Une extrémité de la connexion est soudée sur le support conducteur de l'une des électrodes, et l'autre extrémité est reliée à une borne de sortie de courant.

Le document US-4,009,053 décrit un générateur électrochimique comportant des électrodes qui sont enroulées en spirale pour former un bobineau. L'extrémité du bobineau est formée par la tranche des électrodes. Les électrodes d'une même polarité sont reliées à un collecteur de courant par l'intermédiaire de leurs tranches. Ces tranches viennent en prise avec des saillies réalisées au niveau de fentes radiales du collecteur de courant. La liaison entre une électrode et un collecteur est ainsi réalisée par un contact pressé. Ce type de contact n'est cependant pas adapté à des décharges de courant importantes.

Il est connu du document DE―A-301 91 86 un générateur électrochimique à fermeture étanche aux gaz comportant des électrodes enroulées, reliées électriquement à un disque conducteur. Le disque conducteur, est réalisé sous forme d'une tôle métallique mince et flexible. Le disque conducteur est muni d'une languette qui lui est attachée, et qui est recourbée contre lui en formant un angle aigu. Cette languette est fixement reliée à la face intérieure du couvercle du générateur. Des ailettes sont formées de biais des deux côtés de la languette et sont repliées. La languette peut ainsi être appuyée sur le disque conducteur de manière élastique au moyen de ces ailettes. La résistance électrique interne du générateur est cependant élevée.

Il est également connu du document EP-B-0 545 906 un accumulateur à électrolyte alcalin constitué d'une électrode positive et d'une électrode négative, d'un séparateur, d'un godet servant de borne négative et comportant une ouverture, d'un couvercle obturant l'ouverture et servant de borne positive, d'un collecteur de courant de l'électrode négative et d'un collecteur de courant de l'électrode positive. Les électrodes positive et négative sont formées de plaques enroulées en spirale. Le séparateur est interposé entre les électrodes. Le collecteur de courant de l'électrode négative relie une extrémité de l'électrode négative au godet et le collecteur de courant d'électrode positive relie une extrémité de l'électrode positive au couvercle. Le collecteur de courant de l'électrode positive présente une partie collectrice reliée à l'extrémité de l'électrode positive et une languette conductrice reliée au couvercle. La languette conductrice présente une épaisseur supérieure (0,5mm) à la partie collectrice (0,15mm) pour réduire la résistance électrique interne. Le document évoque la possibilité de placer deux collecteurs d'épaisseur standard (0,15mm) entre l'électrode et le couvercle. Chaque collecteur est constitué d'un demi-disque conducteur surmonté d'une languette conductrice. Le courant dans chaque connexion est ainsi réduit de moitié, et la résistance interne est réduite de 20%. Le document propose également d'augmenter l'épaisseur de la connexion mais cette solution pose des problèmes de soudage du disque conducteur et de pliage lors de la fermeture du couvercle.

Les générateurs électrochimiques décrits dans DE-A-301 91 86 et EP-B-0 545 906 présentent des inconvénients supplémentaires. Dans ces générateurs, seule l'impédance au niveau de la languette conductrice est réduite. Ainsi, de tels générateurs présentent une résistance électrique élevée au niveau de la connexion des électrodes aux bornes des générateurs. Cette résistance induit de fortes chutes de tension lors de la fourniture de courants élevés et rend ainsi le générateur inadéquat pour certaines applications, en particulier lorsque le diamètre du générateur dépasse 20mm. De plus, cette résistance induit un échauffement interne important du générateur, ce qui diminue sa durée de vie.

Lors de la fabrication, l'assemblage de générateurs comportant un collecteur à languette est également difficile à réaliser. D'une part, le soudage d'une languette au couvercle est difficile. D'autre part, la fermeture du générateur, après le raccordement de la languette à une borne, est réalisée en pliant la languette. L'augmentation de section de la languette augmente la rigidité de celle-ci. Le pliage de la languette conduit alors à sa détérioration ou à la détérioration de la soudure sur la tranche de l'électrode.

L'invention propose une solution à ces différents problèmes. Elle propose ainsi un générateur électrochimique et un procédé d'assemblage d'un tel générateur, présentant une résistance électrique réduite au niveau de la connexion des électrodes aux bornes.

L'invention propose également un générateur électrochimique et un procédé d'assemblage d'un tel générateur, facilitant la liaison d'un collecteur à une électrode. Cette liaison n'est en outre pas détériorée lors de l'assemblage, tout en présentant une résistance électrique réduite.

Plus précisément, l'invention concerne un générateur électrochimique comprenant une borne positive et une borne négative, au moins une électrode positive reliée électriquement à la borne positive et au moins une électrode négative reliée électriquement à la borne négative, un collecteur d'une première polarité présentant, une partie plane reliée électriquement à l'une des électrodes, et des moyens de liaison électrique flexibles reliant la partie plane à une borne de la première polarité, ces moyens de liaison présentant un rayon de courbure minimum de pliage sur appui inférieur à celui d'une pièce ayant la même épaisseur que la partie plane du collecteur.

Selon une forme d'exécution de l'invention, les moyens de liaison électrique comprennent plusieurs conducteurs flexibles superposés reliant électriquement le collecteur à la borne de la première polarité.

Selon une variante, les conducteurs flexibles ont une forme de lamelles.

De préférence chaque conducteur flexible a une épaisseur inférieure à l'épaisseur moyenne de la partie plane du collecteur.

De préférence encore chaque conducteur flexible a une épaisseur comprise entre 50 et 250 micromètres.

Selon encore une autre variante, les conducteurs flexibles sont réalisés en nickel ou en acier nickelé.

On peut également prévoir un générateur électrochimique dans lequel les conducteurs flexibles présentent un pliage en S.

Selon une variante, le collecteur présente en outre une languette en saillie depuis sa partie plane.

Selon une autre variante, la languette est plus rigide que chaque conducteur flexible.

Selon encore une variante, les conducteurs flexibles présentent une soudure d'une part à la partie plane du collecteur, et d'autre part à une extrémité de la languette.

Selon un autre mode de réalisation, le générateur comprend en outre un collecteur d'une deuxième polarité, relié électriquement à l'électrode de la deuxième polarité, et présentant une languette le reliant électriquement à la borne de la deuxième polarité.

Selon une variante, le collecteur de la deuxième polarité comprend deux plaques présentant chacune une zone de raccordement avec l'électrode de la deuxième polarité, ces deux plaques étant isolées électriquement l'une de l'autre au niveau de leurs zones de raccordement.

Selon une autre variante, les plaques sont reliées électriquement par une connexion d'une résistance électrique supérieure à la liaison des plaques par l'intermédiaire de l'électrode de la deuxième polarité.

Selon encore une variante, ladite connexion des plaques est réalisée par la languette.

Selon encore une autre variante, un pontage relie électriquement les plaques au niveau de leur zone de raccordement.

Selon un autre mode de réalisation, un pontage relie électriquement une plaque à une découpe centrale réalisée dans l'autre plaque.

Selon une variante, le pontage est une saillie d'une plaque repliée et reliée électriquement à l'autre plaque.

Selon encore une variante, la première polarité est positive.

L'invention concerne en outre un procédé de fabrication d'un générateur électrochimique, comprenant les étapes de fourniture de bornes positive et négative, fourniture d'électrodes positive et négative spiralées, fourniture d'un collecteur d'une première polarité présentant une partie plane, connexion par soudage de la partie plane du collecteur à la borne de la première polarité au moyen d'une pluralité de lamelles.

Selon une variante, le soudage est réalisé au moyen d'un faisceau laser.

Selon une autre variante, le procédé comprend en outre une étape de soudage du collecteur sur un bord de l'électrode de la première polarité.

L'invention concerne également un procédé de fabrication d'un générateur électrochimique, comprenant les étapes de fourniture d'une borne négative sous forme de godet, et d'une borne positive, fourniture d'électrodes positive et négative spiralées, fourniture d'un collecteur négatif comprenant deux plaques présentant chacune une zone de raccordement avec l'électrode négative, ces deux plaques étant isolées électriquement l'une de l'autre au niveau de leurs zones de raccordement, soudage des plaques à l'électrode négative au niveau de leurs zones de raccordement, insertion de l'ensemble formé des électrodes et du collecteur négatif dans le godet, soudage du collecteur négatif au godet.

Selon une variante, une plaque du collecteur présente une découpe centrale, et le procédé comprend en outre une étape de soudage d'un pontage sur la découpe centrale de la plaque et sur l'autre plaque après l'étape de soudage des plaques à l'électrode négative.

Selon encore une variante, une plaque du collecteur présente une découpe centrale, et le procédé comprend en outre les étapes de soudage d'un pontage sur une plaque sans laisser le pontage en contact avec l'autre plaque avant l'étape de soudage des plaques à l'électrode négative; de soudage du pontage à l'autre plaque après l'étape de soudage des plaques à l'électrode négative.

Selon une autre variante, le procédé comprend en outre une étape de soudage du pontage sur le godet.

Selon encore une autre variante, le procédé comprend en outre une étape de soudage d'un pontage sur les zones de raccordement respectives des plaques.

On peut également prévoir que le soudage du pontage et le soudage du godet avec le collecteur soient réalisés simultanément.

Selon une variante, le soudage du pontage sur le collecteur est un soudage en aveugle.

Selon une autre variante, le procédé présente en outre les étapes de pliage d'une saillie d'une plaque jusqu'à l'amener en contact avec la zone de raccordement de l'autre plaque après l'étape de soudage des plaques à l'électrode négative; de soudage de la saillie sur l'autre plaque.

Selon encore une variante, l'étape de soudage des plaques du collecteur avec l'électrode négative comprend l'application des plaques contre un bord de l'électrode négative, l'application d'une électrode de soudage sur chaque plaque, et l'application d'un courant de soudure entre les électrodes de soudage.

D'autres caractéristiques et avantages de l'invention apparaîtront à la lecture de la description qui suit du mode de réalisation de l'invention donnée à titre d'exemple et en référence aux dessins qui montrent :
- figure 1, une vue en coupe partielle d'un générateur électrochimique de faible puissance de l'art antérieur;
- figure 2, une vue en perspective d'un générateur électrochimique selon un premier mode de réalisation de l'invention;
- figure 3, une vue en perspective du collecteur de la figure 2;
- figure 4, une vue en coupe de l'intersection d'une électrode et du collecteur de la figure 3:
- figures 5A et 5B, le pliage en U d'une languette seule, comparé au pliage en U d'une languette associée à des lamelles;
- figures 6A et 6B, le pliage en S d'une languette seule, comparé au pliage en S d'une languette associée à des lamelles;
- figure 7, une courbe comparant l'impédance de lamelles associées ou non à une languette, avec l'impédance R en mOhms en ordonnée et le nombre de lamelles en abscisse;
- figure 8, une coupe partielle A-B d'un générateur électrochimique selon l'invention;
- figure 9, une vue de dessus d'un collecteur de borne négative d'un générateur selon un mode de réalisation;
- figure 10, une vue de dessus d'un collecteur de borne négative d'un générateur selon un autre mode de réalisation;
- figure 11, une vue de dessus d'un collecteur de borne négative d'un générateur selon encore un autre mode de réalisation;
- figure 12, une vue partielle d'un bobineau de générateur électrochimique selon un mode de réalisation particulier de l'invention.

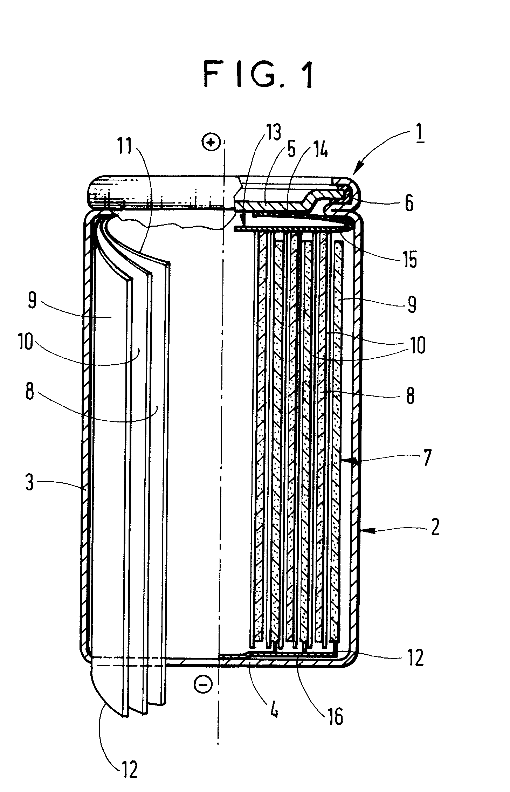

La figure 1 montre un générateur électrochimique de l'art antérieur dont le collecteur relié à la borne positive n'autorise pas le passage d'un courant élevé. Le générateur 1 comprend un godet conteneur 2, présentant une paroi cylindrique 3 obturée par un fond 4 à une extrémité. La paroi cylindrique 3 est débouchante à l'autre extrémité. Un couvercle 5 obture l'extrémité débouchante et est fixé sur le godet 2 par sertissage. L'isolation électrique et l'étanchéité entre le godet 2 et le couvercle 5 sont assurées par un joint 6 en matière plastique (par exemple en polyamide ou polysulfone).

Un bobineau 7 est inséré dans le godet 2 et comporte une électrode positive 8 à base d'hydroxyde de nickel de type fritté ou empâté, et une électrode négative 9 de type empâté ou plastifié. Les électrodes 8 et 9 encadrent un séparateur 10. Ces électrodes sont enroulées en spirale. L'électrode positive 8 et l'électrode négative 9 sont légèrement décalées en hauteur. Ainsi, lorsque les électrodes sont spiralées, l'une des extrémités du bobineau est formée par la tranche 11 de l'électrode positive 8 alors que l'extrémité opposée est formée par la tranche 2 de l'électrode négative 9. Le couvercle 5 sert de borne positive et le fond 4 sert de borne négative au générateur électrochimique. L'électrode positive 8 est reliée électriquement à un collecteur conducteur 13 présentant une languette 14 et une partie plane 15 de même épaisseur, de l'ordre de 0,2 à 0,3 mm. La languette 14 est reliée électriquement à un collecteur conducteur 16 en contact avec le fond 4 du godet 2.

L'invention propose un générateur électrochimique dans lequel un collecteur est relié à une borne par une liaison flexible et de grande section conductrice. Cette caractéristique est obtenue par exemple en utilisant de multiples conducteurs flexibles superposés reliant le collecteur à la borne.

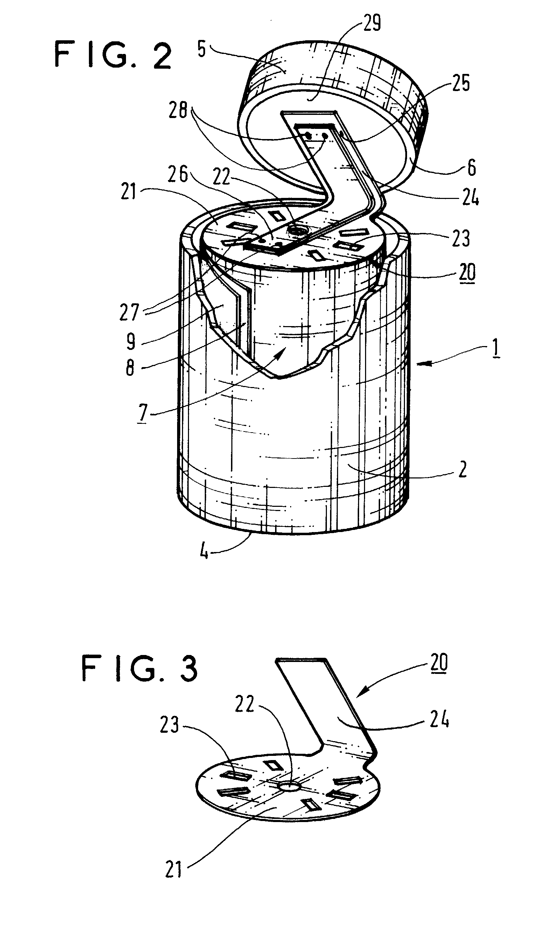

Sur la figure 2, un premier mode de réalisation d'un générateur électrochimique selon l'invention est représenté. Le générateur comprend une liaison électrique entre la borne et une électrode positive. Un collecteur 20, représenté sur la figure 3, comprend un disque plan conducteur 21. Ce disque conducteur 21 comporte un orifice central 22. Le disque conducteur 21 présente également des crevés 23 destinés à former des lèvres, qui ont en outre l'avantage de faciliter l'imprégnation du bobineau 7 par un électrolyte. Le disque 21 est prolongé par une languette 24 reliée électriquement à un couvercle 5 par l'intermédiaire de soudures 25. De multiples lamelles conductrices flexibles 26 sont reliées électriquement au disque plan 21 du collecteur 20 d'une part, et à une extrémité de la languette 24 d'autre part, au moyen des soudures 27 et 28 respectivement.

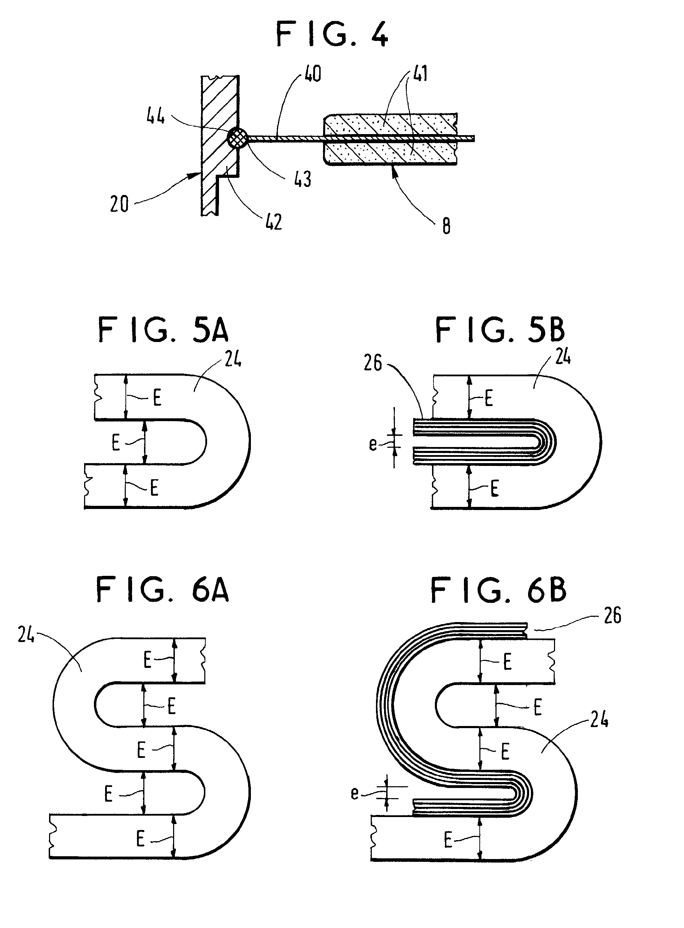

Comme le montre la figure 4, l'électrode positive 8 comprend un support conducteur 40 dont chaque face est recouverte d'une couche 41 contenant une matière active. Le collecteur 20 est relié électriquement à l'électrode positive 8 par le biais de lèvres 42 formées par les crevés 23 découpés dans l'épaisseur du disque plan 21 du collecteur 20. Les lèvres 42 pénètrent dans la tranche 43 de l'électrode, puis une soudure électrique 44 est appliquée de façon à relier ces lèvres 42 à la tranche 43 de l'électrode positive 8.

Le couvercle 5 est utilisé comme borne positive du générateur 1. Ce couvercle 5 comporte par exemple une surface intérieure plane de contact 29. Le couvercle peut être réalisé en acier nickelé. Le collecteur 20 et les lamelles 26 assurent la liaison électrique entre l'électrode positive 8 et la borne positive 5. Le collecteur peut être réalisé en acier nickelé. Les lamelles 26 peuvent être réalisées en nickel. La liaison électrique entre le collecteur 20 et l'électrode positive 8 est réalisée par soudure électrique.

La borne positive 5 est donc reliée électriquement au collecteur 20 par plusieurs lamelles 26 conductrices flexibles. Ces lamelles 26 sont reliées électriquement à la partie plane 21 du collecteur 20 et recouvrent au moins partiellement cette partie plane. Ces lamelles 26 peuvent également recouvrir au moins partiellement la languette 24. On réalise de préférence les lamelles à base de nickel ou d'acier nickelé; on améliore ainsi leur tenue à la corrosion.

La flexibilité des lamelles permet leur pliage sans détérioration lors de l'assemblage du générateur. Les lamelles empilées permettent soit de réduire l'effort de pliage et les dimensions du pliage pour une section de passage donnée, soit d'augmenter la section de passage de courant pour un effort de pliage donné.

Ainsi, lors d'un pliage d'une pièce sur appui, le rayon de courbure de pliage minimum vaut approximativement une demi épaisseur de la pièce. La distance minimum entre les deux parties de la pièce, pliées l'une sur l'autre, est alors égale à l'épaisseur de la pièce. Lors du pliage d'une superposition de pièces, l'épaisseur de la pièce la plus interne qui détermine le rayon de courbure minimum de pliage. En outre, une superposition de n lamelles d'épaisseur e présente une rigidité nettement inférieure à une unique lamelle d'épaisseur E valant (n*e). Les lamelles peuvent donc être fléchies lors du scellement du couvercle sans être détériorées. Les lamelles 26 présentent ainsi de préférence une épaisseur inférieure à celle de la languette 24, et plus particulièrement inférieure à 0,25mm.

En référence aux figures 5A et 5B, on va détailler le premier cas, c'est-à-dire lorsqu'on fixe une section de passage de courant donnée. Par exemple, dans le cas d'une languette unique d'épaisseur E, qui est pliée en U, comme cela est représenté à la figure 5A, la distance entre les parties pliées vaut donc E. La hauteur totale du pliage vaut alors une valeur H=E+E+E. Ainsi pour E= 1,1mm, H= 3,3mm.

Dans le cas d'une languette d'épaisseur E' associée à n lamelles d'épaisseur e, comme cela est représenté à la figure 5B, la distance entre les deux parties est e. Ainsi la hauteur totale de pliage vaut H'=E'+ne+e+ne+E'=2E'+(2n+1)*e. En prenant E'=0,3 et e=0,1mm et n= 8, (ce qui équivaut à E'+ne=1,1mm, soit une épaisseur totale équivalente à l'épaisseur de la languette unique) On obtient H'=2,3 mm. La hauteur du pliage est ainsi sensiblement réduite.

On peut également comparer les hauteurs de pliage dans le cas d'un pliage en S. En appliquant la règle du rayon minimum précédente à une languette unique d'épaisseur E=1,1mm, telle que la languette représentée à la figure 6A, on obtient une hauteur H=5E=5,5mm dans cet exemple.

En appliquant les formules précédentes à une languette d'épaisseur E associée à n lamelles, on obtient une hauteur H'= 4E'+ (3n+1)*e. En prenant E'=0,3mm, e=0,1mm et n=8 ( ce qui équivaut encore à E' +ne=1,1mm, soit une épaisseur totale équivalente à l'épaisseur de la languette unique), on obtient H'=3,7mm.

On en déduit ainsi que le pliage d'une languette surmontée de n lamelles présente une hauteur de pliage inférieure à celle d'une languette unique d'une épaisseur totale équivalente. L'encombrement du générateur peut ainsi être réduit. La connexion peut notamment présenter un rayon de courbure de pliage inférieur au rayon de courbure de pliage qu'aurait une pièce de connexion présentant la même épaisseur que le disque du collecteur.

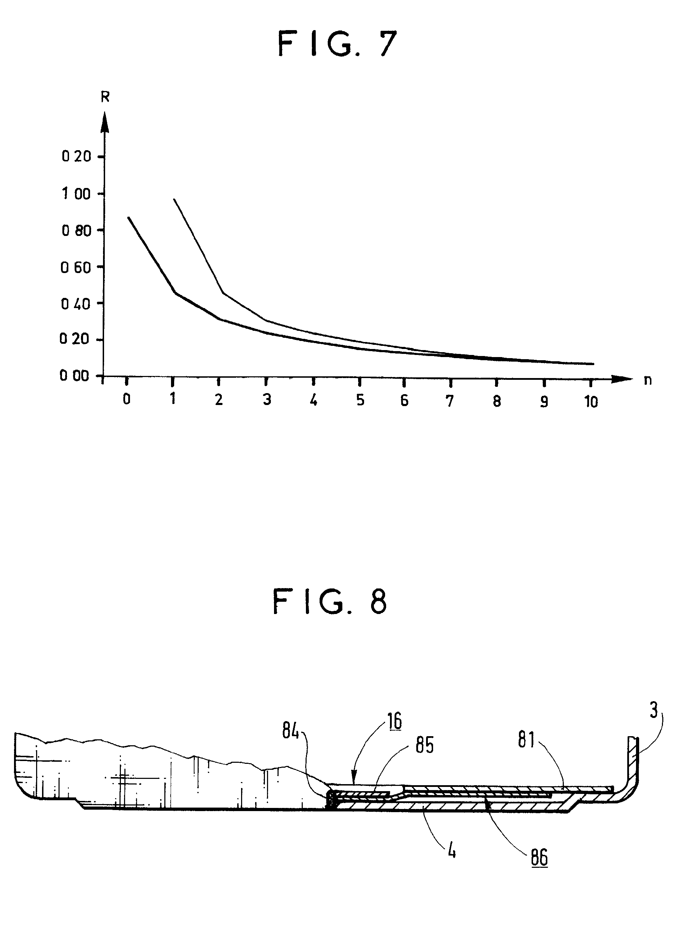

Dans le deuxième cas, la flexibilité permet de limiter l'effort de pliage. L'augmentation de section de passage de courant ne nuit ainsi pas à l'assemblage du générateur. La section de passage de courant peut donc être augmentée proportionnellement au nombre de lamelles comme cela est représenté à la figure 7. Cette figure fait apparaître l'influence du nombre de lamelles sur l'impédance. La résistance électrique R étant inversement proportionnelle à la section de passage pour un matériau donné, l'utilisation d'un grand nombre de lamelles se traduit par une diminution de la résistance électrique au niveau de la connexion de l'électrode à la borne. En fonction du nombre de lamelles, on a constaté en pratique que 90 à 95% du courant passant emprunte les lamelles.

Il est souhaitable d'utiliser des lamelles d'une épaisseur supérieure à 0,05mm pour obtenir une résistance mécanique suffisante au pliage. Une telle épaisseur permet également d'utiliser un feuillard de base d'un coût acceptable. Le coût d'un feuillard augmente en effet inversement proportionnellement à l'épaisseur du feuillard, pour des épaisseurs de feuillard inférieures à 0,2mm.

De préférence, les lamelles sont superposées de façon à réduire leur encombrement dans le générateur. Le nombre de lamelles permet de définir l'épaisseur de la superposition de lamelles en fonction de l'espace disponible dans le générateur. Il est ainsi industriellement aisé de faire varier l'épaisseur de la superposition en utilisant des lamelles d'épaisseurs identiques pour fabriquer différents types de générateurs.

Dans le mode de réalisation décrit précédemment, on conserve une languette reliant électriquement le collecteur à la borne. Cette languette peut également présenter une rigidité supérieure à celle de l'une quelconque des lamelles car le feuillard utilisé est dimensionné par la liaison électrique avec l'électrode positive 8, si l'on souhaite améliorer la liaison du collecteur 20 à l'électrode positive 8. Cette languette peut également présenter une rigidité supérieure à la superposition des lamelles. Cette languette facilite aussi la liaison électrique de l'ensemble des lamelles 26 sur le couvercle 5. Cet assemblage sera décrit plus précisément par la suite.

Selon une autre variante, on peut relier le couvercle 5 au collecteur 20 sans utiliser de languette 24. On peut ainsi utiliser seulement des lamelles rapportées 26 assurer la liaison électrique du collecteur 20 au couvercle 5.

Les liaisons électriques et mécaniques sont réalisées de préférence par des soudures. On peut ainsi relier électriquement les multiples lamelles à la partie plane du collecteur. On peut utiliser des soudures traversant à la fois l'épaisseur du collecteur et celles des lamelles. L'ensemble languette 24 et lamelles 26 est relié électriquement au couvercle 5 par des soudures. Ces soudures traversent également de préférence à la fois l'épaisseur du collecteur et celles des lamelles. Ces soudures traversantes améliorent la conduction électrique ainsi que la fiabilité de la résistance mécanique.

L'invention concerne également un procédé d'assemblage d'un collecteur d'électrode positive selon l'invention. Comme décrit précédemment, le collecteur peut être préassemblé avec les lamelles par le biais de soudures électriques. Le collecteur et les lamelles sont positionnées et serrées entre une contre-électrode de forme. Cette contre-électrode de forme évite d'appuyer sur les lèvres de soudure mais autorise l'appui en vis-à-vis des zones à souder. Une électrode pointue est alors appliquée sur les zones à souder et un courant de soudure est généré entre l'électrode et la contre-électrode. Ce procédé permet de réaliser à moindre coût des soudures traversantes.

Une variante consiste à réaliser la soudure du collecteur sur la tranche de l'électrode, puis la soudure des lamelles.

Une autre variante de pré-assemblage consiste à réaliser les soudures des lamelles par faisceau laser. Ce procédé permet d'augmenter si nécessaire le nombre de points reliant le collecteur aux lamelles. Ce procédé permet surtout d'assurer une fiabilité de soudure à chaque point. Une fois le collecteur assemblé, celui-ci est soudé électriquement sur le bobineau. Le collecteur et les lamelles sont quasiment fendues en deux sur leur axe pour isoler électriquement les deux parties. Seules restent quelques zones de très faible section, appelées couramment "points fusibles" assurant la tenue mécanique des deux parties. Deux électrodes symétriques sont alors appliquées sur chaque demi-partie et un courant de soudure est envoyé entre les deux demi-parties de collecteur. Le courant fond ces points fusibles, puis passe par les lèvres du collecteur et par la tranche de l'électrode. Les interfaces entre les lèvres du collecteur et la tranche de l'électrode vont alors fondre sous l'échauffement ohmique.

Une fois le collecteur relié à l'électrode, le bobineau équipé est inséré dans le godet et le couvercle formant la borne positive est ensuite relié à l'ensemble languette et lamelles.

Dans le cas du mode de pliage dit en "S" d'un collecteur présentant une languette, l'ensemble décrit ci-dessus se positionne face au couvercle de la façon suivante: les lamelles sont comprises entre la languette et le couvercle. Le mode de pliage en "S" consiste à réaliser un pli à la jonction entre la zone plane du collecteur et la languette, puis un autre pli en sens inversé entre la liaison au couvercle de la longuette et le premier pli. Ce pliage est préférable dans certains cas du fait de l'encombrement du couvercle. En outre, la fiabilité du pliage est améliorée. Les lamelles sont alors placées entre des parois d'épaisseurs supérieures. La qualité de la soudure est ainsi améliorée. Cette soudure est réalisée en appuyant une électrode de soudure sur l'ensemble formé par la languette, les lamelles et le couvercle. Cet ensemble est en appui sur une contre-électrode. Un courant de soudure est alors appliqué entre les deux électrodes. La languette, d'une épaisseur supérieure à chacune des lamelles, est en contact avec l'électrode. Du fait de cette épaisseur supérieure, il est possible de faire passer une densité de courant supérieure lors de la soudure, sans détériorer la zone en contact avec l'électrode. La fiabilité de la soudure est ainsi accrue. En outre, le noyau fondu lors de la soudure se positionne sur toutes les épaisseurs.

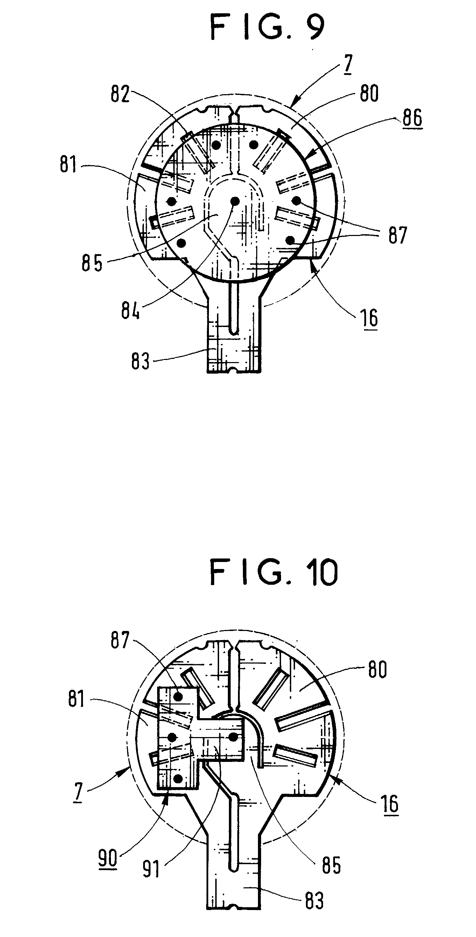

On va maintenant décrire les connexions électriques et mécaniques au niveau de la borne négative. L'électrode négative 9 est reliée au collecteur 16. Le collecteur 16 de l'électrode négative 9, représenté sur les figures 8 et 9, comprend deux plaques 80 et 81 isolées électriquement dans leurs zones de raccordement à l'électrode 9. La plaque 80 présente une découpe centrale 80. Dans l'exemple de la figure 9, le raccordement des plaques à l'électrode 9 est effectué au niveau des crevés 82 munis de lèvres. Ces plaques 80 et 81 sont reliées électriquement ensemble par l'intermédiaire d'une languette excentrée 83. Cette languette 83 est nécessaire pour assurer la liaison mécanique des deux plaques 80 et 81 lors de la liaison du collecteur 16. On obtient ainsi une résistance électrique entre les plaques 80 et 81 plus élevée que la résistance de passage par la tranche de l'électrode négative 9. La soudure du collecteur 16 sur l'électrode négative 9 est ainsi facilitée. Par ailleurs, lorsque le faisceau d'électrodes 7 est placé dans le godet 2, on réalise une soudure électrique 84 afin d'améliorer la liaison électrique entre le fond 4 du godet 2 et le collecteur 16. Cette soudure dite "de fond" ne va raccorder électriquement que la plaque 80 car elle est reliée directement à la découpe centrale 5.

On rapporte ensuite un pontage 86 en forme de disque représenté hachuré sur la figure 9. Ce pontage permet de rétablir une liaison électrique entre les zones de raccordement des plaques 80 et 81 et de réduire la résistance électrique du collecteur 16. Lorsque le collecteur 16 est relié d'une part à l'électrode 9 et d'autre part à la borne négative 4, le pontage 86 est relié électriquement de part et d'autre aux zones 80 et 81. La chute de tension en service entre l'électrode et la borne est alors diminuée. De plus ce pontage est directement soudé au fond du godet 4 par la soudure de fond 84. On peut également souder simultanément le pontage 86 avec la découpe centrale 85. L'assemblage du pontage 86 sur les plaques 80 et 81 est réalisé de préférence par des soudures 87. Le pontage 86 est de préférence réalisé en nickel ou en acier nickelé pour présenter une impédance réduite. On peut par exemple utiliser des feuillards de nickel découpés pour réaliser le pontage. Des feuillards d'une épaisseur de 0,2mm conviennent particulièrement pour réaliser le pontage.

Comme représenté à la figure 10, il est également possible d'assembler un demi-pontage 90 en forme de T reliant la zone de raccordement de la plaque 81à la découpe centrale. Le pontage est assemblé de préférence sur le collecteur 16 avant de relier le collecteur 16 et l'électrode 9. Ceci permet de disposer d'un collecteur muni d'un pontage en bande et de réaliser la liaison électrique en une seule fois. Le demi-pontage 90 est assemblé sur le collecteur. Sa partie centrale 91, en vis-à-vis de la découpe centrale 85 du collecteur 16, est relevée afin de ne pas toucher la découpe centrale 85. On évite ainsi tout court-circuit durant la soudure du collecteur sur l'électrode 9. La partie centrale 91 est alors raccordée au fond de godet 4 durant la réalisation de la soudure de fond 84.

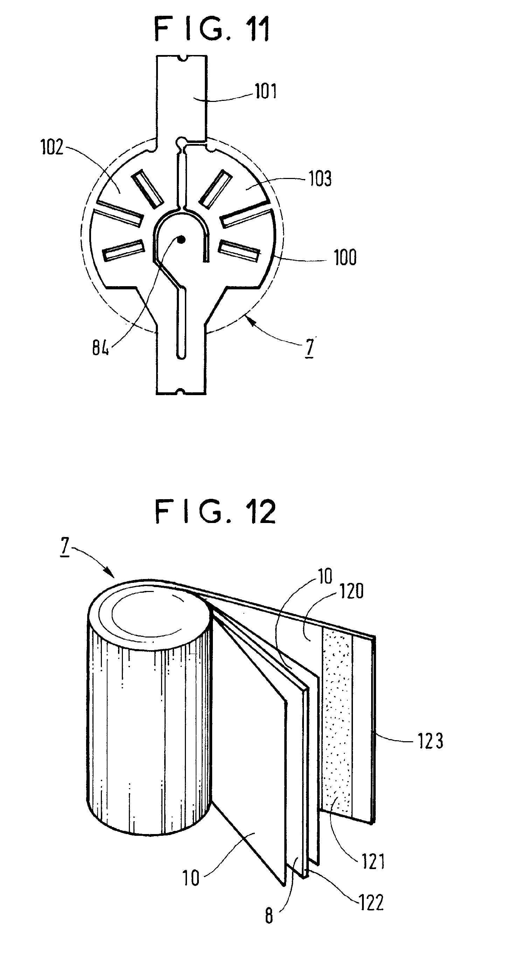

Une variante de ce pontage est décrite dans la figure 11. Le pontage est alors une partie intégrante du collecteur 100. Le pontage se présente alors sous la forme d'une patte de pontage 101 saillant d'une première plaque de raccordement. Lors de l'assemblage du collecteur sur le faisceau d'électrodes, la patte de pontage 101 est rabattue sur le collecteur 100 lui-même. Lors de la réalisation de la soudure de fond 84, la patte de pontage 101 est alors soudée sur la partie de la plaque 102 du collecteur 100 et sur le fond 4 du godet 2, raccordant ainsi les deux plaques 102 et 103 du collecteur 100.

Le mode d'assemblage du collecteur négatif se fera de façon comparable à celui du collecteur positif. Dans le cas du demi-pontage négatif 90, celui ci est préassemblé sur le collecteur du coté de la partie 81 en plusieurs points de soudure électrique ou laser. Puis la partie 91 située au dessus de la zone centrale 85 du collecteur est relevée. On vient appliquer deux électrodes symétriques recouvrant pratiquement les zones 80 et 81 et on génère un courant de soudure. Ce courant va fondre les points fusibles qui tenaient les parties 80 et 81 assemblées puis va générer la soudure des zones de contact entre les lèvres du collecteur 16 et la tranche de l'électrode négative 9. Le bobineau 7 est alors introduit dans le godet 2. Puis une électrode fine et longue est placée au coeur du bobineau 7 pour venir souder la partie centrale découpée 85 du collecteur 16 et la partie 91 en vis-à-vis du demi-pontage 90 sur le fond 4 du godet 2.

Dans l'exemple de la figure 9, le pontage complet est soudé après l'assemblage du collecteur négatif sur l'électrode négative. Le pontage est soudé par passage de courant entre une électrode, par exemple une électrode fine, placée en appui sur le pontage et une contre-électrode placée en appui sur le collecteur autour du pontage et sans le toucher. Ce procédé de soudure utilise donc la rigidité des pièces à souder pour compenser l'effort de soudure. La contre-électrode n'est pas placée en vis-à-vis de l'électrode: ce type de soudure est appelé soudure est en aveugle. De façon similaire, la soudure de fond assemble le fond de godet, le pontage et le collecteur.

Un assemblage complet comprenant une électrode positive et une électrode négative, chacune munie de son collecteur, permet d'obtenir des générateurs présentant une tension de décharge sous 300A de l'ordre de 0,75 Volts à 3 secondes. Des essais préliminaires avec des générateurs standards avaient donné une tension de l'ordre de 0,5 Volts

L'invention concerne également une structure d'électrode négative d'un tel générateur. La figure 12 représente un mode de réalisation d'une telle structure selon l'invention. On enroule en spirale une électrode positive 8 et une électrode négative 120 en disposant sous chacune d'elle d'un séparateur 10, pour former un bobineau 7. Les séparateurs 10 permettent d'éviter le contact entre les électrodes de polarités différentes dans l'enroulement. L'électrode négative 120 est disposée vers l'extérieur de l'enroulement. A la fin de l'enroulement, correspondant au côté extérieur ou à la périphérie du bobineau 7, l'électrode positive 8 se prolonge au-delà du premier séparateur 10 intercalé entre les deux électrodes. Ce séparateur 10 se prolonge au-delà de l'électrode positive 8. Un renfort 121, de préférence un adhésif isolant électrique, est disposé sur la face interne de l'électrode négative exactement en vis-à-vis du bord extrême 122 de l'électrode positive. Ce renfort 121 est destiné à protéger la zone de l'électrode négative 120 qu'il recouvre contre une détérioration provoqués par le bord 122 de l'électrode positive 8. La détérioration est généralement due à des bavures résiduelles laissées par la découpe de l'électrode positive 8 qui, en usant le séparateur 10, finiront par atteindre l'électrode négative 120. Ceci provoque des courts-circuits lors de la perforation du séparateur 10 par le bord 122 de l'électrode positive 8. La pièce 121, en renforçant l'isolement respectif des électrodes 8 et 120 permet ainsi de diminuer les risques de court-circuit entre les électrodes. La hauteur de la pièce de renfort 121 est de préférence choisie sensiblement égale à la hauteur de l'électrode négative 120.

Le renfort 121 peut présenter les caractéristiques suivantes: une épaisseur comprise entre 20 et 150 µm, une largeur comprise entre 2 et 12 mm et un décalage par rapport à l'extrémité 123 de l'électrode négative compris entre 0 et 12mm.

Selon une variante de l'invention, les séparateurs sont renforcés au niveau du début de l'enroulement, c'est-à-dire à proximité du centre du bobineau. Ce renforcement est obtenu en rapportant un additif sur le séparateur, d'une épaisseur inférieure à celle du séparateur. Un tel additif de faible épaisseur assure un renforcement du séparateur en occupant un volume réduit. On peut ainsi conserver une grande compacité du bobineau du générateur en renforçant le film séparateur. L'additif peut se présenter sous forme de film réalisé dans un matériau identique à celui utilisé pour le séparateur. On peut par exemple utiliser un additif d'une épaisseur de 100µm avec un séparateur de 125µm.

Les présents modes de réalisation et exemples doivent être considérés comme ayant été présentés à titre illustratif et non restrictif, et l'invention n'est pas censée être limitée aux détails fournis ici mais peut être modifiée en restant dans le cadre de la portée des revendications annexées.

## Revendications

1. Générateur électrochimique (1) comprenant:
- une borne positive (5) et une borne négative (4),
- au moins une électrode positive (8) reliée électriquement à la borne positive, et
- au moins une électrode négative (9) reliée électriquement à la borne négative,
- un collecteur (20) d'une première polarité présentant
- une partie plane (21) reliée électriquement à l'une des électrodes (8, 9), et
- des moyens de liaison électrique flexibles (24, 26) reliant ladite partie plane (21) à une borne (4, 5) de ladite première polarité, lesdits moyens présentant un rayon de courbure minimum de pliage sur appui inférieur à celui d'une pièce ayant la même épaisseur que la partie plane (21) du collecteur (20).

2. Générateur électrochimique selon la revendication 1, dans lequel lesdits moyens de liaison électrique comprennent plusieurs conducteurs flexibles (26) superposés reliant électriquement ledit collecteur (20) à ladite borne (4, 5) de la première polarité.

3. Générateur électrochimique selon la revendication 2, dans lequel les conducteurs flexibles (26) ont une forme de lamelles.

4. Générateur électrochimique selon l'une des revendications 2 et 3, dans lequel chaque conducteur flexible a une épaisseur inférieure à l'épaisseur moyenne de la partie plane (21) du collecteur.

5. Générateur électrochimique selon l'une des revendications 2 à 4, dans lequel chaque conducteur flexible a une épaisseur comprise entre 50 et 250 micromètres.

6. Générateur électrochimique selon l'une des revendications 2 à 5, dans lequel les conducteurs flexibles sont réalisés en nickel ou en acier nickelé.

7. Générateur électrochimique selon l'une des revendications 2 à 6, dans lequel les conducteurs flexibles présentent un pliage en S.

8. Générateur électrochimique selon l'une des revendications précédentes, dans lequel le collecteur (20) présente en outre une languette (24) en saillie depuis sa partie plane (21).

9. Générateur électrochimique selon la revendication 8, dans lequel la languette (24) est plus rigide que chaque conducteur flexible (26).

10. Générateur électrochimique selon l'une des revendications 8 et 9, dans lequel les conducteurs flexibles (26) présentent une soudure d'une part à la partie plane (21) du collecteur, et d'autre part à une extrémité de la languette (24).

11. Générateur électrochimique selon l'une des revendications précédentes, comprenant en outre un collecteur d'une deuxième polarité (16), relié électriquement à l'électrode de la deuxième polarité (9), et présentant une languette (83) le reliant électriquement à la borne de la deuxième polarité (4).

12. Générateur électrochimique selon la revendication 11, dans lequel le collecteur de la deuxième polarité (16) comprend deux plaques (81, 82) présentant chacune une zone de raccordement avec l'électrode de la deuxième polarité (9), ces deux plaques étant isolées électriquement l'une de l'autre au niveau de leurs zones de raccordement.

13. Générateur électrochimique selon la revendication 12, dans lequel les plaques (81, 82) sont reliées électriquement par une connexion (83) d'une résistance électrique supérieure à la liaison des plaques par l'intermédiaire de l'électrode de la deuxième polarité (9).

14. Générateur électrochimique selon la revendication 13, dans lequel ladite connexion des plaques est réalisée par la languette (83).

15. Générateur électrochimique selon l'une des revendications 12 à 14, dans lequel un pontage (86) relie électriquement les plaques (80, 81) au niveau de leur zone de raccordement.

16. Générateur électrochimique selon l'une des revendications 12 à 15, dans lequel un pontage (90) relie électriquement une plaque à une découpe centrale (85) réalisée dans l'autre plaque.

17. Générateur électrochimique selon l'une des revendications 15 ou 16, dans lequel le pontage est une saillie (101) d'une plaque (102) repliée et reliée électriquement à l'autre plaque (103).

18. Générateur électrochimique selon l'une des revendications précédentes, dans lequel la première polarité est positive.

19. Procédé de fabrication d'un générateur électrochimique, comprenant les étapes de :
- fourniture de bornes positive et négative,
- fourniture d'électrodes positive et négative spiralées,
- fourniture d'un collecteur d'une première polarité présentant une partie plane,
- connexion par soudage de la partie plane du collecteur à la borne de la première polarité au moyen d'une pluralité de lamelles.

20. Procédé selon la revendication 19, dans lequel le soudage est réalisé au moyen d'un faisceau laser.

21. Procédé de fabrication selon l'une des revendications 19 et 20, comprenant en outre une étape de soudage du collecteur sur un bord de l'électrode de la première polarité.

22. Procédé de fabrication d'un générateur électrochimique, comprenant les étapes de :
- fourniture d'une borne négative sous forme de godet, et d'une borne positive,
- fourniture d'électrodes positive et négative spiralées,
- fourniture d'un collecteur négatif comprenant deux plaques présentant chacune une zone de raccordement avec l'électrode négative (4), ces deux plaques étant isolées électriquement l'une de l'autre au niveau de leurs zones de raccordement,
- soudage des plaques à l'électrode négative au niveau de leurs zones de raccordement,
- insertion de l'ensemble formé des électrodes et du collecteur négatif dans le godet,
- soudage du collecteur négatif au godet.

23. Procédé selon la revendication 22, dans lequel une plaque du collecteur présente une découpe centrale, ledit procédé comprenant en outre une étape de soudage d'un pontage sur la découpe centrale de la plaque et sur l'autre plaque après l'étape de soudage des plaques à l'électrode négative.

24. Procédé selon la revendication 22, dans lequel une plaque du collecteur présente une découpe centrale, ledit procédé comprenant en outre les étapes de :
- soudage d'un pontage sur une plaque sans laisser le pontage en contact avec l'autre plaque avant l'étape de soudage des plaques à l'électrode négative,
- -soudage du pontage à l'autre plaque après l'étape de soudage des plaques à l'électrode négative.

25. Procédé selon l'une des revendications 23 et 24, comprenant en outre une étape de soudage du pontage sur le godet.

26. Procédé selon l'une des revendications 22 à 25, comprenant en outre une étape de soudage d'un pontage sur les zones de raccordement respectives des plaques.

27. Procédé selon la revendication 26, dans lequel le soudage du pontage et du godet avec le collecteur sont réalisés simultanément.

28. Procédé selon l'une des revendications 22 à 26, dans lequel le soudage du pontage sur le collecteur est un soudage en aveugle.

29. Procédé selon la revendication 22, présentant en outre les étapes de :
- pliage d'une saillie d'une plaque jusqu'à l'amener en contact avec la zone de raccordement de l'autre plaque après l'étape de soudage des plaques à l'électrode négative,
- soudage de la saillie sur l'autre plaque.

30. Procédé selon l'une des revendications 22 à 29, dans lequel l'étape de soudage des plaques du collecteur avec l'électrode négative comprend :
- l'application des plaques contre un bord de l'électrode négative,
- l'application d'une électrode de soudage sur chaque plaque,
- l'application d'un courant de soudure entre les électrodes de soudage.
